# DEMANDE DE BREVET EUROPEEN

(11) **EP 0 773 318 A1**
(43) Date de publication de la demande: **14.05.1997**
(21) Numéro de dépôt: 95870121.1
(22) Date de dépôt: 07.11.1995
(51) Int. Cl.: D21H 13/44

(54) **Papier mica conducteur de chaleur, produits dérivés et procédé pour leur obtention**

(71) Demandeur: COMPAGNIE ROYALE ASTURIENNE DES MINES, Société Anonyme, B-1050 Bruxelles (BE)
(72) Inventeur: Barrutia, Esther, B-1950 Kraainem (BE); Dai-Son, Chau, B-1420 Braine L'Alleud (BE); Mortier, Noel, B-9052 Gent (BE)
(74) Mandataire: Van Malderen, Joelle

(57) **Abrégé**

La présente invention concerne un papier mica conducteur de chaleur, caractérisé en ce qu'il comprend un mélange homogène de paillettes de mica et de paillettes d'un matériau conducteur de chaleur.

## Description

### Objet de l'invention.

La présente invention se rapporte à une matière essentiellement à base de mica et qui présente des propriétés de conductibilité thermique avantageuses.

La présente invention se rapporte également aux produits utilisant cette matière.

La présente invention se rapporte également à un procédé destiné à réaliser des produits micacés conducteurs de chaleur selon la présente invention.

### Etat de la technique.

Il est déjà connu d'utiliser un mélange de paillettes de mica et de poudre d'éléments inorganiques auquel on doit ajouter des fibres synthétiques telles que des fibres aramides afin de faciliter la cohésion du papier mica. Le principal inconvénient d'un tel produit réside dans le fait que les fibres synthétiques comme les fibres aramides que l'on introduit dans le produit sont des fibres particulièrement onéreuses. En outre, elles limitent la tenue à la chaleur du produit final.

Il est également connu par le document EP-A-0266602 d'utiliser des bandes de mica comme isolant électrique pour isoler des bobines destinées à des machines électriques. Dans ce document, il est décrit qu'entre les différentes couches de mica, on dispose une fine couche d'un matériau conducteur de chaleur qui est constitué d'une résine d'imprégnation chargée d'une charge présentant une conductibilité thermique importante. A titre d'exemple, on cite les nitrures de bore, d'aluminium et de silicium ainsi que les oxydes d'aluminium, de magnésium, de béryllium et le carbure de silicium.

### Buts de l'invention.

La présente invention vise à proposer une matière se présentant sous forme de papier mica, qui possède de ce fait toutes les propriétés intrinsèques du papier mica telles que l'isolation électrique ou la résistance à la compression, tout en présentant des propriétés améliorées de conductibilité thermique.

Plus précisément, la présente invention vise à proposer une matière se présentant sous forme de papier mica qui présente des propriétés homogènes de conductibilité thermique au sein dudit papier mica.

La présente invention vise également à proposer des produits dérivés réalisés à partir du papier mica décrit ci-dessus et qui présentent des caractéristiques homogènes de conductibilité thermique au sein desdits produits.

La présente invention vise également à proposer de réaliser un papier mica ou des produits dérivés qui ne nécessitent pas l'adjonction de fibres au sein des produits.

### Principaux éléments caractéristiques de l'invention.

La présente invention se rapporte tout d'abord à un papier mica conducteur de chaleur, qui comprend un mélange homogène de paillettes de mica et de paillettes d'un matériau conducteur de chaleur.

Il convient de noter que par "papier mica", on entend une feuille réalisée selon les techniques habituelles de papeterie et qui comprend au moins 40% de mica sous forme de paillettes orientées.

Habituellement, les paillettes de mica sont de type soit phlogopite, soit muscovite calciné ou non, soit encore un mélange des deux, tandis que par matériau conducteur de chaleur, on entend un matériau présentant une conductibilité thermique supérieure à celle du papier mica.

Le matériau conducteur de chaleur peut être réalisé directement à partir d'un élément conducteur de chaleur tel que les nitrures de bore, d'aluminium ou de silicium, les oxydes d'aluminium, de magnésium ou de béryllium et le carbure de silicium.

Selon une autre forme d'exécution, le matériau conducteur de chaleur est un matériau composite qui comprend d'une part l'élément conducteur de chaleur tel que défini ci-dessus, mais également un liant organique ou inorganique.

Selon une autre forme d'exécution, le matériau conducteur de chaleur est un matériau composite qui comprend, outre l'élément conducteur de chaleur et un liant, également du mica.

Dans ces deux dernières formes d'exécution, on souhaite limiter la quantité de liant, et celle-ci est comprise de préférence entre 2 et 20%.

Le liant peut être soit une résine de type époxy, silicone, polyimide, polyester ou phénolique, ou un liant inorganique de type borate, silicate ou phosphate.

Le pourcentage de l'élément conducteur de chaleur est compris entre 5 et 60% de la composition totale du papier mica.

Selon une première forme d'exécution, la taille des paillettes de mica est de préférence comparable à celle des paillettes du matériau conducteur de chaleur, et est de préférence comprise entre 60 et 5000 µm.

Selon une autre forme d'exécution, la taille des paillettes de mica est nettement différente de la taille des paillettes du matériau conducteur de chaleur et est de préférence supérieure à cette dernière.

Le papier mica obtenu ainsi que décrit ci-dessus peut être ensuite imprégné de manière classique d'un liant approprié en vue de réaliser soit des plaques rigides destinées par exemple à des applications de type circuits chauffants, soit des rubans flexibles qui peuvent être utilisés comme isolant électrique.

La présente invention se rapporte également au procédé de réalisation d'un tel papier mica ou de produits dérivés d'un papier mica, dans lesquels on effectue essentiellement un mélange de paillettes de mica et de paillettes d'un matériau présentant de bonnes propriétés de conductibilité thermique en vue de réaliser de manière classique un papier mica.

Selon une première forme d'exécution du procédé de réalisation, on réalise d'abord un mélange de "scraps" de mica et de "scraps" d'un matériau conducteur de chaleur que l'on soumet à une désintégration simultanée en vue d'obtenir un mélange homogène de paillettes d'une part de mica et d'autre part du matériau conducteur de chaleur qui présentent une taille essentiellement comparable.

Selon une autre forme d'exécution, on réalise de manière séparée une désintégration des "scraps" de mica en paillettes de mica et une désintégration des "scraps" du matériau conducteur de chaleur en paillettes du matériau conducteur de chaleur selon des granulométries essentiellement différentes, et on met en contact ces paillettes de mica et de matériau conducteur de chaleur lors de la réalisation du papier mica.

Selon une variante d'exécution, on réalise des "scraps" d'un matériau conducteur de chaleur directement à partir de feuilles compactes comprenant un élément conducteur de chaleur exempt de liant.

Selon une autre variante d'exécution, on réalise des "scraps" d'un matériau conducteur de chaleur directement à partir de feuilles compactes comprenant un élément conducteur de chaleur imprégnées par un liant.

Selon une dernière forme d'exécution, on réalise des "scraps" ou des paillettes d'un matériau conducteur de chaleur à partir d'un produit composite composé d'une feuille de papier mica exempt de liant sur laquelle on dépose un fin film d'un élément conducteur de chaleur imprégné par un liant. On désintègre ensuite ce produit composite en paillettes d'un matériau conducteur de chaleur composite.

### Brève description des figures.

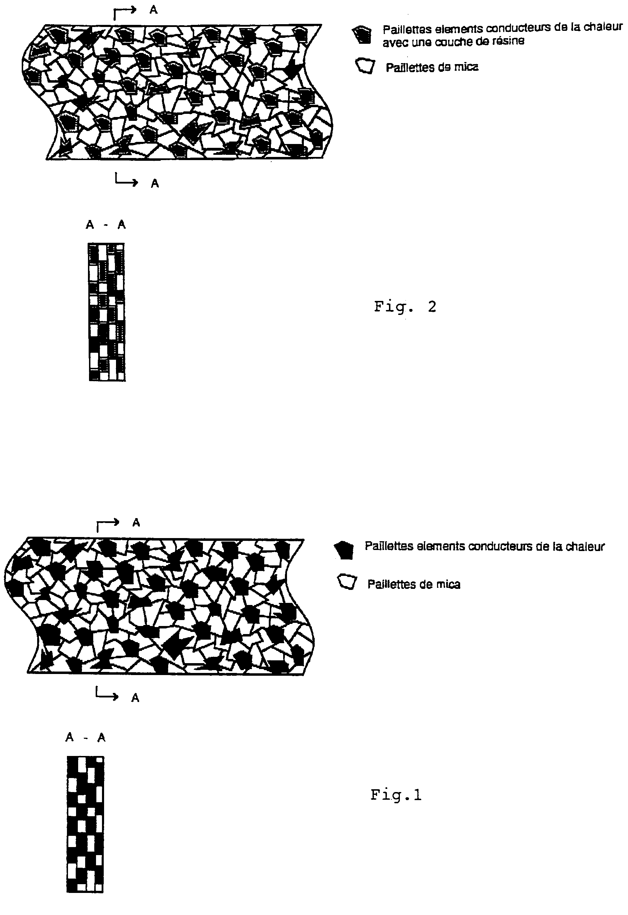

Les figures 1 et 2 représentent des vues en coupe longitudinale et transversale de deux produits micacés selon deux formes d'exécution de la présente invention, dans lesquelles on observe un mélange homogène de deux structures paillettaires.

### Description de plusieurs formes d'exécution préférées.

Il est connu de fabriquer des papiers mica directement à partir de "scraps" de mica, les "scraps" étant la forme chimiquesous laquelle le minerai de mica est extrait des mines.

La technique générale consiste à réduire les "scraps" de mica à l'état de paillettes (flakes), par exemple par une désintégration mécanique sous eau, et à traiter la pulpe ainsi obtenue sur une machine similaire aux machines de papeterie afin de fabriquer un papier mica. Actuellement, plusieurs types de papier mica sont commercialisés. Ceux-ci dépendent essentiellement de la nature du minerai. On connaît les papiers mica muscovite constitués exclusivement de minerai de mica de type muscovite calciné ou non, le papier mica phlogopite constitué exclusivement de minerai de type phlogopite ou encore les papiers réalisés à partir d'un mélange de différents minerais. Dans certains cas, on utilise en outre la vermiculite en adjonction à d'autres matières pour fabriquer du papier mica.

On connaît également l'utilisation de mica synthétique pour la création d'un papier mica.

Ce papier mica est utilisé comme matière première pour la fabrication de rubans, de feuilles, de stratifié (micanite). Habituellement, pour cela, le papier mica doit être imprégné par des liants organiques (résines) ou inorganiques et/ou collé sur un support souple mécaniquement résistant, afin de donner les propriétés physiques voulues au produit final.

La présente invention consiste à utiliser essentiellement la technique décrite ci-dessus pour réaliser un papier mica mais présentant des caractéristiques homogènes de conductibilité thermique. Pour ce faire, il est nécessaire d'ajouter aux paillettes de mica des paillettes d'un matériau conducteur de chaleur. Diverses formes d'exécution sont envisageables pour obtenir des paillettes d'un matériau conducteur.

Selon une première forme d'exécution, on se procure des feuilles d'un élément conducteur de chaleur sous forme essentiellement pure, que l'on transforme en "scraps" comparables à des "scraps" de mica. On désintègre ensuite ces deux sortes de "scraps" afin d'obtenir d'une part des paillettes de mica et d'autre part des paillettes d'un élément conducteur de chaleur.

Selon une seconde forme d'exécution, on réalise une feuille constitué d'un mélange d'élément conducteur de chaleur et de liant que l'on transforme éventuellement en "scraps" avant de les désintégrer sous forme de paillettes.

Selon une troisième forme d'exécution, on réalise un premier papier mica selon la technique décrite ci-dessus uniquement à partir de paillettes de mica, sur lequel on place une fine couche d'un élément conducteur de chaleur combiné à un liant de type organique ou inorganique, afin de réaliser un matériau composite. Ce matériau composite qui est conducteur de chaleur est ensuite désintégré sous forme de paillettes elles-mêmes composites qui sont essentiellement constituées de mica et d'un élément conducteur de chaleur avec une faible proportion d'un liant.

Selon des formes d'exécution préférées, on envisage de réaliser un tel matériau composite présentant une épaisseur comprise entre 0,1 et 1 mm, et de préférence entre 0,1 et 0,3 mm, dans lequel la quantité en liant est comprise entre 2 et 15%, et de préférence entre 3 et 5%.

Ensuite, selon la technique décrite ci-dessus de réalisation d'un papier mica, on mélange soit les paillettes constituées par l'élément conducteur de chaleur à l'état pur obtenu selon la première forme d'exécution décrite ci-dessus, soit les paillettes composites d'un matériau conducteur de chaleur obtenues selon les seconde et troisièmes formes d'exécution décrites ci-dessus, à des paillettes de mica afin de réaliser un papier mica conducteur de chaleur.

Selon une première variante d'exécution de la technique de réalisation d'un papier mica conducteur de chaleur, on réalise un mélange de "scraps" de mica et de "scraps" du matériau conducteur de chaleur sous forme pure ou non, que l'on désintègre ensuite ensemble sous forme de paillettes. Dans ce cas, on obtiendra des paillettes présentant une taille comparable pour le mica et pour le matériau conducteur de chaleur, qu'il soit sous forme pure ou sous forme composite.

De préférence, les dimensions sont comprises entre 60 et 5000 µm, ceci dépendant essentiellement de la nature du papier mica à réaliser, ainsi que de son utilisation.

Selon une seconde variante d'exécution de cette technique, on désintègre dans une première étape les "scraps" en paillettes de mica et indépendamment de cette étape, on réalise également une désintégration en paillettes d'un matériau conducteur, mais selon une granulométrie éventuellement différente. Ce n'est ensuite qu'au cours du procédé de réalisation du papier mica que ces deux éléments sont mis en contact en vue de réaliser le papier mica. Dans ce cas, le papier mica contient des paillettes de mica présentant des dimensions relativement différentes de celles des paillettes du matériau conducteur.

Néanmoins, dans tous les cas, le fait de mélanger le matériau conducteur de chaleur se présentant soit sous forme pure, soit sous forme composite, en amont du procédé de réalisation du papier mica dans une machine de type papeterie, permet d'obtenir de manière particulièrement avantageuse un papier mica conducteur de chaleur dont le propriétés seront parfaitement homogènes au sein dudit papier.

On obtient ainsi un papier mica soit totalement exempt de liant, soit présentant une proportion très faible, et de préférence comprise entre 0 et 6%.

La proportion matériau conducteur / mica dépend essentiellement de l'utilisation et de l'application auxquelles le papier mica est destiné. Habituellement, la teneur en matériau conducteur de chaleur est comprise entre 5 et 60% au sein de papier mica conducteur.

Ensuite, le papier mica obtenu est transformé soit en plaques rigides par imprégnation d'un liant de type organique ou inorganique, soit sous forme de produits de type flexible tels que des rubans par imprégnation d'un liant de préférence inorganique tel que résine époxy, silicone ou phénolique, avec ou sans support.

De manière avantageuse, les produits ainsi obtenus présentent de manière intrinsèque les propriétés du mica telles que l'isolation électrique et la résistance à la compression, tout en présentant de bonnes caractéristiques de conductibilité thermique. Le principal avantage réside surtout dans le fait que les propriétés de conductibilité thermique sont réparties de manière particulièrement homogène au sein des produits obtenus, qu'ils soient de type rigide ou de type souple.

En outre, les procédés de réalisation de tels produits présentent une simplicité d'exécution et peuvent s'effectuer sur des équipements classiques qui de ce fait ne nécessitent pas d'investissements complémentaires.

La présente invention sera décrite plus précisément à l'aide des exemples d'exécution préférés suivants.

### Exemple 1 (selon la présente invention)

On désire réaliser des plaques destinées à être utilisées dans le domaine du circuit intégré chauffant. Le matériau conducteur utilisé dans ce cas est le nitrure de bore, qui se présente sous forme de feuilles de nitrure de bore que l'on désintègre en vue d'obtenir des paillettes d'une taille comprise entre 60 et 2500 µm.

A ces paillettes, on mélange des paillettes de mica de type phlogopite d'une taille comparable dans une proportion 70% mica - 30% nitrure de bore. On traite ensuite ce mélange mica - nitrure de bore de manière classique en vue de réaliser un papier mica conducteur de chaleur.

Ensuite, on imprègne ce papier mica à raison de 10% d'une résine de type silicone, et on réalise des plaques d'isolation électrique mais conductrices de chaleur selon des procédés classiques de pressage. Selon ce procédé, on réalise des plaques de 0,07 à 0,3 mm.

### Exemple 2 (selon la présente invention)

Le même type de plaques a été réalisé que dans l'exemple 1, mais dans ce cas, on utilise un matériau conducteur qui est constitué par un oxyde d'aluminium et une résine silicone.

### Exemple 3 (selon l'état de la technique)

On a réalisé une plaque comprenant également de l'oxyde d'aluminium, mais disposé dans ce cas à la surface d'une plaque déjà réalisée à l'aide d'un papier mica exempt d'un matériau conducteur de chaleur et déjà imprégnée d'une résine de silicone.

En soumettant un tel produit à des températures supérieures à 700 °C, on observe que le liant est détruit et que l'oxyde d'aluminium n'est déjà plus lié au papier mica lorsque l'on chauffe le produit à des températures supérieures à 450 °C.

### Exemple 4 (selon la présente invention)

On a réalisé un ruban à base de papier mica conducteur de chaleur utilisé pour ses propriétés d'isolant électrique. Le produit est fabriqué selon le procédé suivant : 75% de mica de type muscovite ont été mélangés à 25% de nitrure de bore en vue de réaliser un papier mica tel que décrit dans l'exemple 1. Le papier mica composite ainsi obtenu est imprégné d'une résine époxy contenant un accélérateur Zn à raison de 7% de teneur en résine époxy.

Ensuite, un feutre de verre a été déposé sur le papier mica imprégné ainsi obtenu, également à l'aide d'une résine époxy classique à raison de 2%.

### Exemple 5 (selon la présente invention)

Cet exemple est une variante d'exécution de l'exemple 4, dans laquelle on mélange 75% de paillettes de type muscovite à 20% de matériau conducteur de chaleur constitué par un oxyde d'aluminium en vue de réaliser un papier mica tel que décrit précédemment.

Ensuite, on imprègne ce papier mica à raison de 5% d'une résine époxy classique. L'accélérateur Zn n'est ajouté qu'ultérieurement, et enfin un feutre de verre est disposé sur ce papier mica selon la même procédure que l'exemple précédent.

D'autres variantes d'exécution sont envisageables, telles que l'utilisation d'un mélange de différents matériaux conducteurs de chaleur tel qu'un mélange de nitrure de bore et d'oxyde d'aluminium, et ceci pour différents types de paillettes de mica.

Il est également tout à fait envisageable d'utiliser d'autres résines de type époxy en vue de réaliser des rubans particulièrement riches pouvant atteindre des proportions d'environ 40% de liant au sein du produit fini.

Il est également envisageable d'utiliser d'autres éléments de soutien des rubans que le feutre de verre, tels qu'un film tissé ou non tissé de polyester.

Il est bien entendu que la présente invention ne se limite pas aux exemple d'exécution tels que décrits, mais inclura toutes les variantes d'exécution évidentes pour l'Homme de l'Art.

## Revendications

1. Papier mica conducteur de chaleur, caractérisé en ce qu'il comprend un mélange homogène de paillettes de mica et de paillettes d'un matériau conducteur de chaleur.

2. Papier mica selon la revendication 1, caractérisé en ce que les paillettes de mica sont de type muscovite ou phlogopite ou un mélange des deux, ou encore à base de mica synthétique.

3. Papier mica selon la revendication 1 ou 2, caractérisé en ce que le matériau conducteur de chaleur est constitué soit d'un élément conducteur de chaleur à l'état pur, c'est-à-dire exempt de liant, soit d'un matériau composite comprenant entre autres un élément conducteur de chaleur.

4. Papier mica selon la revendication 3, caractérisé en ce que le matériau composite est constitué soit d'un élément conducteur de chaleur lié par un liant de type organique ou inorganique, soit d'un élément conducteur de chaleur lié par un liant de type organique ou inorganique associé à du mica.

5. Papier mica selon la revendication 3 ou 4, caractérisé en ce que l'élément conducteur de chaleur est un nitrure de bore, d'aluminium ou de silicium, un oxyde d'aluminium, de magnésium ou de béryllium ou un carbure de silicium.

6. Papier mica selon l'une quelconque des revendications 3 à 5, caractérisé en ce que la teneur en élément conducteur de chaleur est comprise entre 5 et 60% de la composition totale du papier mica.

7. Papier mica selon l'une quelconque des revendications 3 à 6, caractérisé en ce que la teneur en liant présent au sein du papier mica est comprise entre 0 et 20%, et de préférence entre 0 et 5%, de la composition totale du papier mica.

8. Papier mica selon l'une quelconque des revendications 3 à 7, caractérisé en ce que le liant est une résine organique de type époxy, silicone, polyimide, polyester ou phénolique ou un liant inorganique de type borate, silicate ou phosphate.

9. Papier mica selon l'une quelconque des revendications précédentes, caractérisé en ce que la taille des paillettes de mica est comparable à la taille des paillettes du matériau conducteur de chaleur, et est de préférence comprise entre 60 et 5000 µm.

10. Papier mica selon l'une quelconque des revendications 1 à 8, caractérisé en ce que la taille des paillettes de mica est différente de celle des paillettes du matériau conducteur de chaleur.

11. Plaque rigide constituée à partir d'un papier mica selon l'une quelconque des revendications précédentes, imprégné d'un liant de type organique ou inorganique.

12. Ruban flexible constitué à partir d'un papier mica selon l'une quelconque des revendications 1 à 10, imprégné d'un liant de type organique ou inorganique.

13. Procédé d'obtention d'un papier mica selon l'une quelconque des revendications 1 à 10, caractérisé en ce que l'on effectue un mélange constitué de paillettes de mica et de paillettes d'un matériau conducteur de chaleur au cours d'un procédé de réalisation classique d'un papier mica.

14. Procédé selon la revendication 13, caractérisé en ce que les paillettes de mica sont obtenues directement par désintégration de "scraps" de mica, soit de type muscovite, soit de type phlogopite, soit à base de mica synthétique.

15. Procédé selon la revendication 13 ou 14, caractérisé en ce que les paillettes du matériau conducteur de chaleur sont obtenues par désintégration de "scraps" d'un matériau conducteur de chaleur.

16. Procédé selon la revendication 15, caractérisé en ce que les "scraps" du matériau conducteur de chaleur sont obtenues à partir d'une feuille constituée d'un élément conducteur de chaleur sous forme pure, c'est-à-dire exempt de liant.

17. Procédé selon la revendication 15, caractérisé en ce que les "scraps" du matériau conducteur de chaleur sont réalisés à partir d'une feuille constituée d'un élément conducteur de chaleur lié par un liant de type organique ou inorganique.

18. Procédé selon la revendication 15, caractérisé en ce que les "scraps" du matériau conducteur de chaleur sont obtenus à partir d'un élément composite comprenant un élément conducteur de chaleur lié par un liant de type organique ou inorganique et déposé sur un papier mica exempt de liant.

19. Procédé selon l'une quelconque des revendications 13 à 18, caractérisé en ce que les "scraps" du matériau conducteur de chaleur sont mélangés aux "scraps" de mica et/ou de mica synthétique et que la désintégration s'effectue de manière simultanée en vue d'obtenir des paillettes de mica et des paillettes d'un matériau conducteur de chaleur d'une taille comparable.

20. Procédé selon l'une quelconque des revendications 13 à 18, caractérisé en ce que les "scraps" de mica sont désintégrés en paillettes de manière séparée aux "scraps" du matériau conducteur de chaleur en vue d'obtenir deux compositions de granulométries différentes.
